# EUROPEAN PATENT SPECIFICATION

(11) **EP 4 383 469 B1**
(45) Date of publication and mention of the grant of the patent: **17.12.2025**
(21) Application number: 22852344.5
(22) Date of filing: 05.08.2022
(51) Int. Cl.: H01R 13/40, H01R 13/629, H01R 31/06, B60L 53/16, B60L 53/18, H01R 11/11, H01R 13/42, B60L 3/00, H01R 13/11

(54) **CHARGING SOCKET AND VEHICLE**
LADEDOSE UND FAHRZEUG
PRISE DE CHARGE ET VÉHICULE

(30) Priority: 06.08.2021 CN 202110904550
(43) Date of publication of application: 12.06.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/110554
(87) International publication number: WO 2023/011633

(56) References cited:
- CN-A- 108 110 462
- CN-A- 108 110 462
- CN-A- 110 289 523
- CN-A- 113 725 652
- CN-A- 113 745 881
- CN-A- 113 858 998
- CN-U- 206 992 349
- CN-U- 206 992 349
- CN-U- 209 266 743
- CN-U- 209 266 743
- JP-A- 2016 144 306
- US-A1- 2018 248 275
- US-B2- 8 747 157

## Description

### RELATED DISCLOSURE

The present disclosure claims priority of the Chinese patent disclosure with the disclosure number 202110904550.6, filed on August 06, 2021, and entitled "Charging Socket and Vehicle".

### TECHNICAL FIELD

The present disclosure relates to the technical field of connection of electrical connection components, and in particular to a charging socket and a vehicle.

### BACKGROUND

New energy batteries for new energy vehicles supplement energy using a charging system. The charging socket in the charging system includes a charging terminal and a cable which are connected inside the charging socket, the charging terminal is fixed on a charging socket body, and the cable runs through a rear cover. Due to excessive number of times of insertion and removal, or due to short circuit, part of the charging terminals in the charging socket may be damaged. When repairing and replacing the charging terminal, it is necessary to detach all the cables of the charging socket from the vehicle body at first, then remove the rear cover from the charging socket, detach the securing clip, and take out the charging terminal connected to the cable. A charge terminal, plug bush that charges, a fill electric gun and a charging socket are known from the prior art, for example from CN206992349U. A new energy car charging plug, a socket and an electrical connector capable of easy replacement of wear part are known from the prior art, for example from CN108110462A. An automobile connector socket with temperature sensor is known from the prior art, for example from CN209266743U.

Because the charging terminal and the cable are connected generally by the way of crimping or welding, it is necessary to cut off the damaged electrical connection device. In addition, because the cable length is set without repair allowance, it may also be necessary to replace the cable, and the charging socket can be repaired only when all the outer sheath and tapes of the entire cable removed, the whole process needs to consume a lot of manpower and time, which seriously affects the efficiency of after-sales repair, hence in the prior arts, a new solution is urgently needed to solve said problem.

### SUMMARY OF THE INVENTION

The present invention is defined by the independent claims. Further embodiments are set forth in the dependent claims. Any references to inventions or embodiments not falling within the scope of the independent claims are to be interpreted as examples useful for understanding the invention. The purpose of the present disclosure is to provide a charging socket and a vehicle to solve the problem that when a charging terminal of the charging socket is damaged, it is difficult to replace the charging terminal.

The above purpose of the present disclosure can be achieved by adopting the following technical solutions.

The present disclosure provides a charging socket, comprising: a charging socket body, a charging terminal, a detachable device and a flat cable, in which the detachable device is electrically connected to a conductor of the flat cable, and is fixedly mounted on the charging socket body; the charging terminal is provided with a connection structure, and is detachably connected to the detachable device by means of the connection structure.

In some embodiments, the front end of the charging socket body is provided with a cavity, the detachable device is arranged inside the cavity, the charging terminal is inserted into an opening of the cavity and is detachably connected to the detachable device by means of the connection structure.

In some embodiments, the detachable device includes a fixed end which is connected to the conductor of the flat cable by the way of welding or crimping or threaded connection or being integrally formed.

In some examples, the welding manner includes one or more of resistance welding, friction welding, ultrasonic welding, arc welding, laser welding, electron beam welding, and pressure diffusion welding.

In some embodiments, the conductor of the flat cable is provided with a through hole, and the fixed end includes a bolt and a nut, and the bolt runs through the through hole and is threaded with the nut.

In some examples, the bolt is threaded with the nut at a torque of 0.1 N·m to 30 N·m.

In some embodiments, the conductor of the flat cable is provided with a first threaded hole, the fixed end comprises a stud, and the stud is threaded with the first threaded hole.

In some examples, the stud is threaded with the first threaded hole at a torque of 0.1 N·m to 30 N·m.

In some embodiments, the number of the detachable device ranges from 2 to 36.

In some embodiments, the charging socket body is provided with a slot through which the flat cable is routed, and the slot is configured to prevent the flat cable from moving along the axis direction of the stud.

In some embodiments, the slot is provided with a wire outlet, and the flat cable is routed through the slot by passing through the wire outlet.

In some embodiments, the wire outlet is arranged towards a side direction of the charging socket body.

In some embodiments, the orientation direction of the wire outlet and the side direction of the charging socket body form a certain angle.

In some embodiments, a seal gasket is arranged between the flat cable and the charging socket body.

In some embodiments, a disassembly portion is provided at the rear end of the charging terminal, and the cross sectional shape of the disassembly portion is flat or polygonal.

In some embodiments, the detachable device further includes a detachable structure for being detachably connected with the connection structure.

In some examples, the detachable structure is threaded with the connection structure

In some embodiments, the detachable structure is a clasp and the connection structure is a slot, or the detachable structure is a slot and the connection structure is a clasp, and the detachable structure is clamped with the connection structure at a connection force ranging from 5 N to 500 N.

In some examples, the detachable structure is clamped with the connection structure at a connection force ranging from 15 N to 300 N.

In some embodiments, the charging socket body further includes a fixed portion which fixedly connects the flat cable to the charging socket body.

In some embodiments, the charging socket body is provided with a second threaded hole, the fixed portion is provided with a connecting hole, the fixed portion further comprises a screw, the screw passes through the connecting hole to be threaded with the second threaded hole, and the fixed portion is fixedly connected to the charging socket body.

In some embodiments, the number of the charging terminal ranges from 2 to 36.

In some embodiments, the flat cable is made of one of copper or copper alloys or aluminum or aluminum alloys.

In some embodiments, the charging socket body is provided with a temperature sensor and a control board, and the temperature sensor is electrically connected to the control board through a data line.

In some embodiments, the temperature sensor is in contact connection with the conductor of the flat cable.

In some embodiments, the temperature sensor is formed integrally with the conductor of the flat cable.

In some embodiments, the control board is a circuit board within which a logical control circuit is provided.

In some embodiments, the temperature sensor is an NTC temperature sensor or a PTC temperature sensor.

In some embodiments, the temperature sensor is arranged on the detachable device.

In some embodiments, the cross-sectional area of the connection structure of the charging terminal is less than or equal to the cross-sectional area of the detachable device.

In some embodiments, a first coating is provided on the charging terminal.

In some embodiments, the material of the first coating contains one or more of gold, silver, nickel, tin, tin-lead alloy, zinc, silver-antimony alloy, palladium, palladium-nickel alloy, graphite-silver, graphene-silver and silver-gold-zirconium alloy.

In some embodiments, a second coating is provided on surface of the detachable device.

In some embodiments, the material of the second coating contains one or more of gold, silver, nickel, tin, tin-lead alloy, zinc, silver-antimony alloy, palladium, palladium-nickel alloy, graphite-silver, graphene-silver and silver-gold-zirconium alloy.

In some embodiments, the material of the second coating is different from that of the first coating.

In some embodiments, the flat cable is at least partially provided with a third coating, the material of the third coating contains one or more of gold, silver, nickel, tin, tin-lead alloy, zinc, silver-antimony alloy, palladium, palladium-nickel alloy, graphite-silver, graphene-silver and silver-gold-zirconium alloy.

The present disclosure further provides a vehicle comprising a charging socket as described above.

The present disclosure has the following characteristics and advantages:

In the charging socket, when the charging terminal is damaged or the charging terminal makes poor contact with the cable, it is only necessary to detach the charging terminal from the front, detach an electrical connection device and the cable from the charging socket, replace the electrical connection device and then mount them again, and there is no need to detach the entire charging socket or to replace the cable, thereby solving the technical problem that maintenance work is relatively complicated when the electrical connection device of the charging socket is damaged.

### BRIEF DESCRIPTION OF THE DRAWINGS

In order to more clearly explain the technical solution in the embodiments of the present disclosure, drawings that need to be used in description of the embodiments will be simply introduced below, obviously the drawings in the following description are merely some examples of the present disclosure, for persons ordinarily skilled in the art, it is also possible to obtain other drawings according to these drawings without making creative efforts.
FIG. 1 is a side view of the charging socket body in an embodiment of the present disclosure;
FIG. 2 is a structural schematic diagram of the embodiment of the present disclosure;
FIG. 3 is a structural schematic diagram of a charing terminal in the embodiment of the present disclosure;
FIG. 4 is a front view of a charging terminal in the embodiment of the present disclosure;
FIG. 5 is a right view of the charging terminal in the embodiment of the present disclosure;
FIG. 6 is a structural schematic diagram of a flat cable in the embodiment of the present disclosure.

Description of the reference numerals:
1. charging socket body;
2. charging terminal;
3. detachable device;
31. fixed end;
4. seal gasket;
5. slot;
6. nut;
7. flat cable;
8. disassembly portion;
9. connection structure;
11. wire outlet.

### DETAILED OF THE EMBODIMENTS

Hereinafter the technical solution in the embodiments of the present disclosure will be described clearly and integrally in combination with the accompanying drawings in the embodiments of the present disclosure.

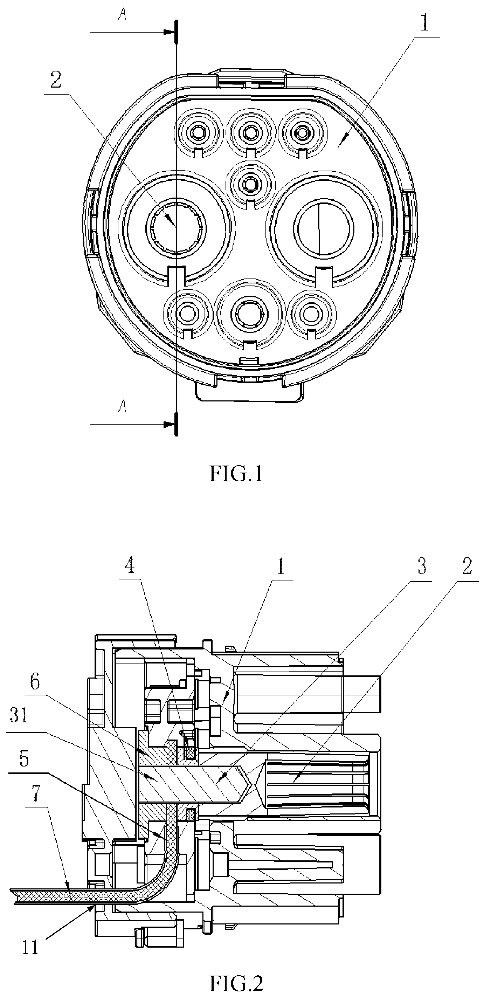

The present disclosure provides a charging socket, as shown in FIG. 1 and FIG. 2, including: a charging socket body 1, a charging terminal 2, a detachable device 3 and a flat cable 7, in which the detachable device 3 is electrically connected to a conductor of the flat cable 7, and is fixedly mounted on the charging socket body 1; the charging terminal 2 is provided with a connection structure 9, and is detachably connected to the detachable device 3 by means of the connection structure 9.

In the existing charging socket, the charging terminal 2 is a device that is often plugged into and removed from the charging socket body 1, and is also the main part of conducting the charging current. During prolonged, not only frequent plugging and unplugging operations result in deformation and coating damage of the charging terminal 2, or even ignition and melting of the the charging terminal 2 as a result of an excessive current, thus the charging terminal 2 cannot achieve functions thereof. In addition, the charging terminal 2, when exposed to an external environment, may be corroded by water or salt in the environment, so that electrical properties of the charging terminal 2 to fail to meet the requirements. Therefore, in the whole charging socket, the charging terminal 2 is the most easily damaged part. However, in most of the current charging sockets, the charging terminal 2 is fixedly mounted on the charging socket body 1 and is welded with the cable. When the charging terminal 2 is damaged, it is necessary to detach all the charging terminal 2 and the cable from the charging socket body 1 and replace them, and in serious cases, the entire charging socket body 1 needs to be replaced, thus the maintenance operation is cumbersome, the maintenance time is long, and the maintenance cost is high, which is one of the current main problems restricting the development of the rechargeable vehicle industry.

The present disclosure provides a charging socket. When the charging terminal 2 is damaged, it is only necessary to detach the charging terminal 2 from the charging socket body 1, to replace the charging terminal 2 and then mount it again, and there is no need to detach the entire charging socket body 1 or to replace the cable, thereby solving the technical problem that maintenance work is relatively complicated when the charing terminal 2 of the charging socket body 1 is damaged.

In some embodiments, the front end of the charging socket body 1 is provided with a cavity, the detachable device 3 is arranged at the bottom of the cavity, the charging terminal 2 is inserted into an opening of the cavity and is detachably connected to the detachable device 3 by means of the connection structure 9.

According to the invention, the detachable device 3 includes a fixed end 31 which is connected to the conductor of the flat cable 7 by the way of welding or crimping or threaded connection or being integrally formed. The welding provides stronger connection between the detachable device 3 and the flat cable 7, and the threaded connection makes it easier to detach the detachable device 3. When the detachable device 3 needs to be replaced again, the detachable device 3 can be detached separately without affecting other devices.

In some examples, the welding manner includes one or more of resistance welding, friction welding, ultrasonic welding, arc welding, laser welding, electron beam welding, and pressure diffusion welding.

The ultrasonic welding refers to that high-frequency vibration wave is transmitted to the surfaces of two objects to be welded, and under pressurization, the surfaces of two objects rub against each other to form a fusion between molecular layers.

The resistance welding refers to a method of welding by strong current passing through the contact point between the electrode and the workpiece to generate heat from the contact resistance.

The arc welding refers to that electric arc is taken as the heat source and the physical phenomenon of atmospherical discharges is utilized to convert electrical energy into thermal and mechanical energy required for welding, so as to achieve the purpose of connecting metal, and the main methods include welding electrode arc welding, submerged arc welding, gas shielded welding and so on.

The pressure welding method is a method of applying pressure to a weldment to make the binding surface be in contact closely to produce a certain plastic deformation and complete the welding.

The electron beam welding method refers to the use of accelerated and focused electron beam to bombard the welding surface placed in vacuum or non-vacuum, so that the welded workpiece is melted to achieve welding.

The laser welding method refers to an efficient and precise welding method using a laser beam with high energy density as a heat source.

The friction welding method refers to a method of welding by using the heat generated by the friction of the workpiece contact surface as the heat source to make the workpiece produce plastic deformation under the action of pressure.

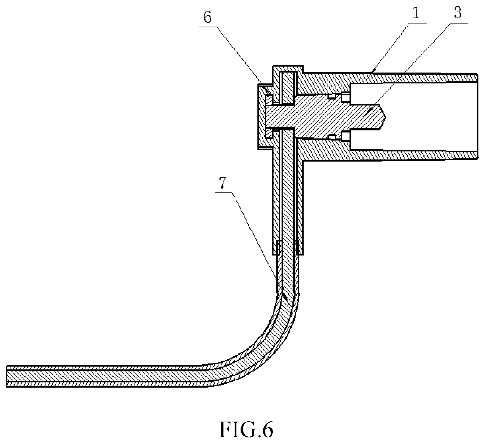

The conductor of the flat cable is provided with a through hole, and the fixed end 31 includes a bolt and a nut 6, and as shown in FIG. 6, the bolt runs through the through hole and is threaded with the nut 6.

In an example, the bolt is threaded with the nut 6 at a torque of 0.1 N·m to 30 N·m.

In order to verify the effect of the range of the torque at which the bolt is threaded with the nut 6 on electrical connection performance of the charging terminal 2 and the flat cable 7, the inventor uses the same charging terminal 2, flat cable 7, bolt and nut 6 and screws them together with different torques to test the contact resistance between the charging terminal 2 and the flat cable 7 and the connection between the bolt and the nut 6 after vibration test respectively. The test results are shown in Table 1.

The contact resistance between the charging terminal 2 and the flat cable 7 is tested using a micro-ohmmeter, one end of the measuring end of the micro-ohmmeter is placed on the charging terminal 2 and the other end on the flat cable 7, which are placed at the same position for each measurement, and then the contact resistance reading is read on the micro-ohmmeter. In this example, the contact resistance is greater than 1 mΩ, which is considered to be unqualified.

In the vibration test, the connected sample is placed on the vibration test table, and subjecting them to 300 vibration cycles, with vibrations applied in 6 directions at a frequency of 100 Hz and an acceleration of 40m/s² in one direction during each cycle, and then it is desirable to observe whether there is loosening between the bolt and the nut 6. In this example, the loosening between the bolt and the nut 6 is considered to be unqualified.

**Table 1 Effects of different torques on contact resistance and connection conditions**

| Torque at which the bolt is threaded with the nut (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Contact resistance between the charging terminal and the flat cable (mΩ) | | | | | | | | | | | | | |
|---|---|---|---|---|---|---|---|---|---|---|---|---|---|
| 1.18 | 1.05 | 0.95 | 0.94 | 0.91 | | 0.86 | 0.83 | 0.80 | 0.78 | 0.74 | 0.73 | 0.73 | 0.73 |

| Connection conditions between the bolt and the nut | | | | | | | | | | | | | |
|---|---|---|---|---|---|---|---|---|---|---|---|---|---|
| Loo seni ng | Loo sening | Not loos ening | Not loos ening | Not loos ening | Not loos ening | Not loos ening | Not loos ening | Not loos ening | Not loos ening | Not loos ening | Not loos ening | Not loos ening | Not loos ening |

As can be seen from Table 1 above, when the value of the torque at which the bolt is threaded with the nut 6 is less than 0.1 N·m, the value of the contact resistance between the charging terminal 2 and the flat cable 7 is unqualified, and loosening between the bolt and the nut 6 occurs after vibration test, therefore, the inventor sets the minimum value of the torque at which the bolt is threaded with the nut 6 to be 0.1 N·m. When the value of the torque at which the bolt is threaded with the nut 6 is greater than 30 N·m, the contact resistance can no longer be further reduced, therefore, the inventor determines the range of the torque at which the bolt is threaded with the nut 6 to be 0.1 N·m to 30 N·m.

In an exemplary embodiment, the conductor of the flat cable 7 is provided with a first threaded hole, the fixed end 31 includes a stud, and the stud is threaded with the first threaded hole. Thus quick replacement of the flat cable 7 and the stud can be realized.

The stud is threaded with the first threaded hole at a torque of 0.1 N·m to 30 N·m.

In order to verify the effect of the range of the torque at which the stud is threaded with the first threaded hole on the electrical connection performance of the stud and the first threaded hole, the inventor uses the same charging terminal 2, the stud and the first threaded hole, and screws them together with different torques to test the contact resistance between the stud and the first threaded hole and the connection between the stud and the first threaded hole after vibration test respectively. The test results are shown in Table 1.

The contact resistance between the stud and the first threaded hole is tested using a micro-ohmmeter, one end of the measuring end of the micro-ohmmeter is placed on the stud and the other end next to the first threaded hole, which are placed at the same position for each measurement, and then the contact resistance reading is read on the micro-ohmmeter. In this example, the contact resistance is greater than 1 mΩ, which is considered to be unqualified.

In the vibration test, the connected sample is placed on the vibration test table, and subjecting them to 300 vibration cycles, with vibrations applied in 6 directions at a frequency of 100 Hz and an acceleration of 40m/s² in one direction during each cycle, and then it is desirable to observe whether the first thread hole loosens. In this example, loosening of the first thread hole is considered to be unqualified.

**Table 2 Effects of different torques on contact resistance and connection conditions**

| Torque at which the stud is threaded with teh first threaded hole (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Contact resistance between the stud and the first threaded hole (mΩ) | | | | | | | | | | | | | |
|---|---|---|---|---|---|---|---|---|---|---|---|---|---|
| 1.16 | 1.05 | 0.96 | 0.94 | 0.91 | 0.88 | 0.86 | 0.83 | 0.81 | 0.79 | 0.74 | 0.71 | 0.71 | 0.71 |

| Connection conditions between the stud and the first threaded hole | | | | | | | | | | | | | |
|---|---|---|---|---|---|---|---|---|---|---|---|---|---|
| Loo seni ng | Loo seni ng | Not loos enin g | Not loos enin g | Not loos enin g | Not loos enin g | Not loos enin g | Not loos enin g | Not loos enin g | Not loos enin g | Not loos enin g | Not loos enin g | Not loos enin g | Not loos enin g |

As can be seen from Table 2 above, when the value of the torque at which the stud is threaded with the first threaded hole is less than 0.1 N·m, the value of the contact resistance between the stud and the first threaded hole is unqualified, and loosening between the stud and the first threaded hole occurs after vibration test, therefore, the inventor sets the minimum value of the torque at which the stud is threaded with the first threaded hole to be 0.1 N·m. When the value of the torque at which the stud is threaded with the first threaded hole is greater than 30 N·m, the contact resistance can no longer be further reduced, therefore, the inventor determines the range of the torque at which the stud is threaded with the first threaded hole to be 0.1 N·m to 30 N·m.

In an embodiment, the number of the detachable device ranges from 2 to 36. The number of the charging terminal 2 also ranges from 2 to 36. That is to say, all charging terminals 2 can be set as detachable mechanisms, and no matter which charging terminal 2 is damaged, it can be replaced quickly, thereby saving maintenance time and reducing maintenance costs.

In an exemplary embodiment, the charging socket body is provided with a slot and the flat cable 7 is threaded through the slot, and the slot is configured to prevent the flat cable 7 from moving along the axis direction of the stud.

In some embodiments, the charging socket body 1 is provided with a wire outlet 11 through which the flat cable 7 passes to run through the charging socket body 1 to facilitate to plug and remove and assemble the flat cable 7, and the installation position of the flat cable 7 can be sealed to ensure the water resistance of the charging socket body 1, which is more convenient to operate and improve the assembly efficiency.

The wire outlet 11 may limit the wire outlet position and the wire outlet direction of the flat cable 7. In an embodiment, the wire outlet 11 is arranged towards a side direction of the charging socket body 1. The wire outlet 11 is arranged along a vertical direction, and the flat cable 7 is routed along the vertical direction and can be bent. In an embodiment, the wire outlet 11 is arranged along a horizontal direction, and the flat cable 7 is routed along the horizontal direction and can be bent. Further, the charging socket body 1 is provided with at least two groups of wire outlets 11, one group of which are arranged in the vertical direction and the other group are arranged in the horizontal direction, and in use, one of the two groups can be selected for arrangement of the flat cable 7, so that the wire outlet direction of the flat cable 7 is adapted with the installation environment.

In an embodiment, the orientation direction of the wire outlet 11 and the front-rear direction of the charging socket body 1 form a certain angle. In the installation environment of the charging socket body 1, the wire outlet direction of the flat cable 7 of the charging socket body 1 is not necessarily at rear or lateral side of the charging socket body 1, but may also form a certain angle with the axial direction of the charging socket body 1. The orientation direction of the wire outlet 11 can be set directly as the direction required for wire outgoing of the flat cable 7 in the installation environment to avoid bending the flat cable 7 again, so that the flat cable 7 can also be installed directly during installation to avoid the situation that the flat cable 7 cannot be bent and installed due to its high hardness.

In an exemplary embodiment, a seal gasket 4 is arranged between the flat cable 7 and the charging socket body 1, as shown in FIG. 1, to effectively prevent water or dust from entering the charging socket body 1.

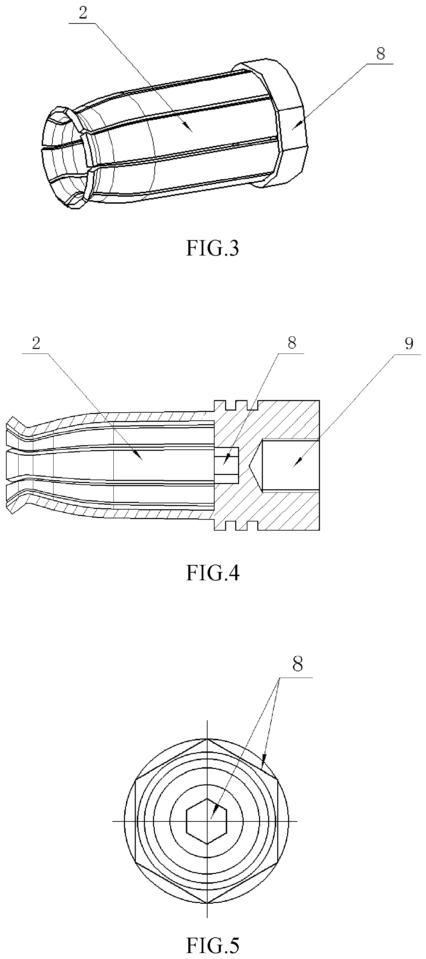

In an exemplary embodiment, a disassembly portion 8 is provided at the rear end of the charging terminal 2, and as shown in FIGs. 3 and 5, the cross sectional shape of the disassembly portion 8 is flat or polygonal.

In some embodiments, the detachable device further includes a detachable structure for being detachably connected with the connection structure 9. One end of the detachable structure is connected with the fixed end 31 on the detachable device, and the other end is detachably connected to the connection structure 9.

In an exemplary embodiment, the detachable device further includes a detachable structure. The detachable structure is threaded with the connection structure 9 in many specific ways. For example, the detachable mechanism has external thread and the connection structure 9 has internal thread. As shown in FIG. 4, the connection structure 9 can sleeve outside the detachable mechanism for threaded connection. Alternatively, the detachable mechanism has internal thread and the connection structure 9 has external thread, and the connection structure 9 extends into the detachable structure for threaded connection. In this way, when the charging terminal 2 is damaged and needs to be replaced, the charging terminal 2 can be easily unscrewed and replaced with a new charging terminal 2.

The detachable structure is threaded with the connection structure at a torque ranging from 0.1 N·m to 30 N·m.

In order to verify the effect of the range of the torque at which the detachable structure is threaded with the connection structure 9 on the electrical connection performance of the detachable structure and the connection structure 9, the inventor uses the same detachable structure and the connection structure 9, and screws them together with different torques to test the contact resistance between the detachable structure and the connection structure 9 and the connection between the detachable structure and the connection structure 9 after vibration test respectively. The test results are shown in Table 3.

The contact resistance between the detachable structure and the connection structure 9 is tested using a micro-ohmmeter, two ends of the measuring end of the micro-ohmmeter are placed on the detachable structure and the connection structure 9 respectively, which are placed at the same position for each measurement, and then the contact resistance reading is read on the micro-ohmmeter. In this example, the contact resistance is greater than 1 mΩ, which is considered to be unqualified.

In the vibration test, the connected sample is placed on the vibration test table, and subjecting them to 300 vibration cycles, with vibrations applied in 6 directions at a frequency of 100 Hz and an acceleration of 40m/s² in one direction during each cycle, and then it is desirable to observe whether there is loosening between the detachable structure and the connection structure 9. In this example, the loosening between the detachable structure and the connection structure 9 is considered to be unqualified.

**Table 3 Effects of different torques on contact resistance and connection conditions**

| Torque at which the detachable structure is threaded with the connection structure (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Contact resistance between the detachable structure and the connection structure 9 (mΩ) | | | | | | | | | | | | | |
|---|---|---|---|---|---|---|---|---|---|---|---|---|---|
| 1.16 | 1.05 | 0.94 | 0.94 | 0.91 | 0.88 | 0.86 | 0.83 | 0.81 | 0.78 | 0.74 | 0.72 | 0.72 | 0.72 |

| Connection between the detachable structure and the connection structure 9 | | | | | | | | | | | | | |
|---|---|---|---|---|---|---|---|---|---|---|---|---|---|
| Loo seni ng | Loo seni ng | Not loos enin g | Not loos enin g | Not loos enin g | Not loos enin g | Not loos enin g | Not loos enin g | Not loos enin g | Not loos enin g | Not loos enin g | Not loos enin g | Not loos enin g | Not loos enin g |

It can be seen from Table 3 above that when the value of the torque at which the detachable structure is threaded with the connection structure 9 is less than 0.1 Nm, the value of the contact resistance between the detachable structure and the connection structure 9 is unqualified, and loosening between the detachable structure and the connection structure 9 occurs after vibration test, therefore, the inventor sets the minimum value of the torque at which the detachable structure is threaded with the connection structure to be 0.1 N·m. When the value of the torque at which the detachable structure is threaded with the connection structure 9 is greater than 30 Nm, the contact resistance can no longer be further reduced. Therefore, the inventor determines the range of the torque at which the detachable structure is threaded with the connection structure 9 to be 0.1 Nm to 30 Nm.

In some embodiments, the detachable structure is a clasp and the connection structure 9 is a slot, or the detachable structure is a slot and the connection structure 9 is a clasp, and the detachable structure is clamped with the connection structure 9 at a connection force ranging from 5 N to 500 N.

In order to test the effect of the connection force at which the detachable structure is clamped with the connection structure 9 on the electrical conductivity, the inventor uses 10 pairs of the detachable structure and the connection structure 9 with the same shape and the same expansion and contraction joint width to carry out connection force test, and the test results are shown in Table 2.

**Table 4 Influence of different connection forces on electric conductivity**

| | | | | | | | | | | |
|---|---|---|---|---|---|---|---|---|---|---|
| Connection force (N) | 40 | 50 | 80 | 100 | 200 | 300 | 400 | 500 | 520 | 550 |
| Electric conductivity | 99.5 % | 99.6 % | 99.6 % | 99.6% | 99.6% | 99.7% | 99.7% | 99.8% | 99.8% | 99.8% |
| Connection force (N) | 3 | 4 | 5 | 6 | 8 | 10 | 15 | 20 | 25 | 30 |
| Electric conductivity | 97.8 % | 98.4 % | 99.1 % | 99.1% | 99.2% | 99.3% | 99.4% | 99.4% | 99.4% | 99.5% |

As can be seen from Table 4, when the connection force is less than 5 N or greater than 500 N, the electric conductivity decreases significantly, which cannot meet the actual demand. When the connection force is greater than 5 N and less than 500 N, the conductive performance is better, and when the connection force is greater than 15 N and less than 300 N, the conductive performance is also excellent. However, when the connection force is greater than 300 N, the electric conductivity growth is not obvious, and the processing is difficult, thus the inventor believes that the exemplary connection force is 15 N to 300 N.

In an exemplary embodiment, the charging socket body 1 further includes a fixed portion which fixedly connects the flat cable 7 to the charging socket body.

Specifically, the charging socket body 1 is provided with a second threaded hole, the fixed portion is provided with a connecting hole, the fixed portion further includes a screw, the screw passes through the connecting hole to be threaded with the second threaded hole, and the fixed portion is fixedly connected to the charging socket body 1. That is to say, when the flat cable 7 is connected to the detachable device 3, it can be further fixed through the fixed portion. Specifically, part of the flat cable 7 is clamped to the charging socket body 1 by the fixed portion and the charging socket body 1 to be fixed.

In some embodiments, the flat cable 7 is made of one of copper or copper alloys or aluminum or aluminum alloys. Due to the high voltage and high current, the cables of electric vehicles need to use conductors with large diameter for conducting the current. The copper conductor material has good conductive performance and good ductility, and is the exemplary conductor material for the flat cable 7. However, with the increasing price of copper, the material cost of using copper as wire will become higher and higher. To this end, people begin to look for alternatives to the metallic copper to reduce costs. The content of metallic aluminium in the earth's crust is about 7.73%, after the refining technology is optimized, the price of the metallic aluminium is relatively low, and compared with copper, aluminum is light in weight and is second only to copper in conductivity, and aluminum can replace some copper in the field of electrical connection. Therefore, it is a developing trend to replace copper with aluminum in the field of automotive electrical connection.

The charging socket body 1 is provided with a temperature sensor and a control board, and the temperature sensor is electrically connected to the control board through a data line.

Further, the temperature sensor is in contact connection with the conductor of the flat cable 7.

Alternatively, the temperature sensor is arranged on the detachable device 3.

Further, the temperature sensor is form integrally with the conductor of the flat cable 7. The integrated molding design is more convenient to install and the measured temperature value is more accurate.

The temperature sensor transmits a temperature signal to the control board to monitor the temperature of the conductor of the flat cable 7 or the detachable device 3 to prevent damage caused by excessive temperature. In addition, the temperature sensor can be directly connected with the conductor of the flat cable 7 and obtain the temperature value of the conductor of the flat cable 7 in real time and transmit the temperature value to the control board. By adjusting the charging current, the control board controls the temperature value of the conductor of the flat cable 7 or the detachable device 3, so that the measurement accuracy of the temperature of the conductor of the flat cable 7 is close to or equal to the theoretical absolute value, thereby achieving high detection accuracy and fast output ability.

Further, the control board is a circuit board within which a logical control circuit is provided. Through the logical control circuit, when the detection temperature of the temperature sensor is higher than the set temperature, the control board sends a warning message to realize real-time temperature monitoring. When the detection temperature of the temperature sensor is higher than the set temperature by a certain value, the charging system is controlled to be automatically disconnected to avoid danger caused by excessive temperature.

Specifically, the temperature sensor may be an NTC temperature sensor or a PTC temperature sensor. The advantage of using the two temperature sensors is that the two temperature sensors have small volume and can measure voids that cannot be measured by other thermometers. The two temperature sensors are easy to use, and the resistance value can be arbitrarily selected between 0.1 Ω and 100 kΩ. The two temperature sensors can be easily processed into complex shapes, can be produced in mass, have good stability and strong overload capacity, and can be applicable to products such as conversion joints that require small volume and stable performance.

The cross-sectional area of the connection structure 9 of the charging terminal 2 is less than or equal to the cross-sectional area of the detachable device 3, which can ensure that the resistance value of the resistance at the connection is not too large.

Copper is a reactive metal, thus an oxidation reaction may occur between copper and oxygen and water during use, therefore, one or more inactive metals are needed as a coating to prolong the service life of the terminal. In addition, for a metal contact that needs to be inserted and removed frequently, a better wear-resistant metal is needed to serve as the coating, which can greatly prolong the service life of the contact. In addition, the contact needs excellent conductive property, and the electric conductivity and stability of the metals mentioned above are better than that of copper or copper alloys, which can make the terminal obtain better electrical property and longer service life.

In some embodiments, a first coating is provided on the charging terminal 2.

The material of the first coating is one or more of gold, silver, nickel, tin, tin-lead alloy, zinc, silver-antimony alloy, palladium, palladium-nickel alloy, graphite-silver, graphene-silver and silver-gold-zirconium alloy.

The charging terminal 2 will oxidize with oxygen and water during use, therefore, one or more inactive metals are needed as a coating to prolong the service life of the terminal. In addition, for a metal contact that needs to be inserted and removed frequently, a better wear-resistant metal is needed to serve as the coating, which can greatly prolong the service life of the contact. In addition, the contact needs excellent conductive property, and the electric conductivity and stability of the metals mentioned above are better than that of copper or copper alloys, which can make the terminal obtain better electrical property and longer service life.

Further, a second coating is provided on surface of the detachable device.

Exemplarily, the material of the second coating is one or more of gold, silver, nickel, tin, tin-lead alloy, zinc, silver-antimony alloy, palladium, palladium-nickel alloy, graphite-silver, graphene-silver and silver-gold-zirconium alloy.

In order to demonstrate the influence of different coating materials on the overall performance of the charing terminal 2, the inventor adopts the same specification and material, uses a sample of the charging terminal 2 with different coating materials, and performs a series of tests of number of times of insertion and removal and corrosion resistance time by using the matching connector assemblies of the same specification. In order to prove the advantages and disadvantages of the selected materials and other commonly used electroplating materials, the inventor also selects tin, nickel and zinc as the coating materials for the experiment. The experimental results are shown in Table 5 below.

The number of times of insertion and removal in the following Table 5 means that the charging terminals 2 are fixed on the experiment table respectively, and the terminal simulates insertion and removal by a mechanical device, and after every 100 times of insertion and removal, it is necessary to stop and observe the damage of the surface coating of the charging terminal 2. When the coating of the terminal surface is scratched and the material of the terminal itself is exposed, the experiment is stopped and the number of times of insertion and removal at that time is recorded. In this example, if the number of times of insertion and removal is less than 8000, it shows an unqualified product.

The test of corrosion resistance time in the Table 5 below refers to, putting the charging terminal 2 into a salt fog spraying test chamber to spray salt fog to each position of the terminal and then taking the terminal out every 20 hours to clean the terminal and observe surface corrosion of the terminal, at that time a cycle ends, and when the corrosion area of the terminal surface is greater than 10% of the total area, stopping the test and recording the number of cycles at that time. In this example, the number of cycles less than 80 is considered as being unqualified.

As can be seen from the Table 5 below, when the material of the coating of the charging terminal 2 is commonly used metal tin, nickel and zinc, the experimental results are far inferior to other selected metals. Although the coating nickel is qualified in the experiment of the number of times of insertion and removal, it is not outstanding, and is not qualified in the salt spray experiment. When other metals are used, the experimental results are more than the standard value, and the performance is stable. Therefore, the inventor selects the material of the coating to be one or more of gold, silver, silver-antimony alloy, graphite-silver, graphene-silver, palladium-nickel alloy, tin-lead alloy, or silver-gold-zirconium alloy.

**Table 5 Influence of different coating materials on the number of times of insertion and removal and corrosion resistance of the charging terminal**

| Different coating materials | | | | | | | | | | | |
|---|---|---|---|---|---|---|---|---|---|---|---|
| Gold | Silver | Silve r-anti mony Alloy | Grap hite-s ilver | Grap hene-silver | Silve r-gol d-zirc oniu m Alloy | Tin | Nickel | Palla dium | Palla dium -nick el Alloy | Tin-1 ead Alloy | Zinc |
| Number of Times of Insertion and Removal (times) | | | | | | | | | | | |
| 12400 | 11900 | 12100 | 12000 | 12700 | 12100 | 8200 | 8400 | 11100 | 12000 | 10000 | 8500 |

| Number of Periods of Corrosion Resistance Test (times) | | | | | | | | | | | |
|---|---|---|---|---|---|---|---|---|---|---|---|
| 131 | 128 | 121 | 131 | 127 | 131 | 82 | 88 | 110 | 120 | 111 | 88 |

The material of the second coating is different from that of the first coating. Different coatings can be selected according to the need. For example, a combination with higher electric conductivity may be selected according to the need, or a combination with better corrosion resistance may be selected, or a combination that is most suitable for the actual working environment may be selected by taking various factors into consideration.

In some embodiments, the flat cable 7 is at least partially provided with a third coating, the material of the third coating contains one or more of gold, silver, nickel, tin, tin-lead alloy, zinc, silver-antimony alloy, palladium, palladium-nickel alloy, graphite-silver, graphene-silver and silver-gold-zirconium alloy.

In order to demonstrate the influence of different coating materials on the performance of the flat cable 7, the inventor adopts the same specification and material, uses a sample of the flat cable 7 with different coating materials to perform test. In order to prove the advantages and disadvantages of the selected materials and other commonly used electroplating materials, the inventor also selects tin, nickel and zinc as the coating materials for the experiment. The experimental results are shown in Table 6 below.

The test of corrosion resistance time in the Table 6 below refers to, putting the flat cable 7 into a salt fog spraying test chamber to spray salt fog to each position of the terminal and then taking the terminal out every 20 hours to clean the terminal and observe surface corrosion of the terminal, at that time a cycle ends, and when the corrosion area of the terminal surface is greater than 10% of the total area, stopping the test and recording the number of cycles at that time. In this example, the number of cycles less than 80 is considered as being unqualified.

As can be seen from the Table 6 below, when the material of the coating of the flat cable 7 is commonly used metal tin, nickel and zinc, the experimental results are far inferior to other selected metals. When other metals are used, the experimental results are more than the standard value, and the performance is stable. Therefore, the inventor selects the material of the coating to be one or more of gold, silver, silver-antimony alloy, graphite-silver, graphene-silver, palladium-nickel alloy, tin-lead alloy, or silver-gold-zirconium alloy.

**Table 6 Influence of different coating materials on corrosion resistance:**

| Different coating materials | | | | | | | | | | | |
|---|---|---|---|---|---|---|---|---|---|---|---|
| Gold | Silve r | Silve r-anti mony Alloy | Grap hite-s ilver | Grap hene-silver | Silve r-gol d-zirc oniu m Alloy | Tin | Nick el | Palla dium | Palla dium -nick el Alloy | Tin-1 ead Alloy | Zinc |
| Number of Periods of Corrosion Resistance Test (times) | | | | | | | | | | | |
| 131 | 128 | 121 | 131 | 126 | 131 | 82 | 88 | 111 | 120 | 111 | 88 |

The present disclosure further discloses a vehicle including a charging socket as described above. The charging socket not only has a simple manufacturing process, is convenient to machine, but also greatly reduces the machining time of the charging socket. In addition, during the use of the vehicle, if only the electrical connection device of the charging socket is damaged, it is not necessary to detach the entire charging socket and the scrapped cable, and only the charging terminal 2 needs to be detached. The maintenance process is simple and easy to operate, consumes short working hours, and has low maintenance cost, which greatly reduces the cost and maintenance cost of the vehicle disclosed in the present disclosure.

The foregoings are only several embodiments of the present disclosure, and those skilled in the art may make various modifications or variations to the embodiments of the present disclosure according to the disclosure without departing from the scope of the present disclosure.

## Claims

1. A charging socket, wherein comprising: a charging socket body (1), a charging terminal (2), a detachable device (3) and a cable (7), wherein the detachable device (3) is electrically connected to a conductor of the cable (7), and is fixedly mounted on the charging socket body (1); the charging terminal (2) is provided with a connection structure (9), and is detachably connected to the detachable device (3) by means of the connection structure (9), wherein both the charging terminal (2) and the detachable device (3) are arranged along a first direction,
**characterized in that** the cable is a flat cable (7); and
a segment of the flat cable (7) disposed in the charging socket body (1) extends along a second direction perpendicular to the first direction and is provided with a through hole, the detachable device (3) comprises a fixed end (31), and the fixed end (31) comprises a bolt and a nut (6), wherein the nut (6) and the connection structure (9) are located on opposite sides of the through hole in the first direction, and the bolt runs through the through hole along the first direction and is threaded with the nut (6).

2. The charging socket according to claim 1, wherein a front end of the charging socket body (1) is provided with a cavity, the detachable device (3) is arranged inside the cavity, the charging terminal (2) is inserted into an opening of the cavity and is detachably connected to the detachable device (3) by means of the connection structure (9).

3. The charging socket according to claim 1, wherein the detachable device (3) further comprises a detachable structure for being detachably connected with the connection structure (9).

4. The charging socket according to claim 3, wherein the detachable structure is threaded with the connection structure (9).

5. The charging socket according to claim 3, wherein the detachable structure is a clasp and the connection structure (9) is a slot (5), or the detachable structure is a slot (5) and the connection structure (9) is a clasp, and the detachable structure is clamped with the connection structure (9).

6. The charging socket according to claim 1, wherein the number of the detachable device (3) ranges from 2 to 36.

7. The charging socket according to claim 1, wherein the detachable device (3) comprises a fixed end (31) which is connected to the conductor of the flat cable (7) by the way of welding or crimping or threaded connection or being integrally formed.

8. The charging socket according to claim 7, wherein
the conductor of the flat cable (7) is provided with a first threaded hole, the fixed end (31) comprises a stud, and the stud is threaded with the first threaded hole;
the stud is threaded with the first threaded hole at a torque of 0.1 N·m to 30 N·m; or
the charging socket body (1) is provided with a slot (5), and the flat cable (7) is threaded through the slot (5), and the slot (5) is configured to prevent the flat cable (7) from moving along the axis direction of the stud;
the charging socket body (1) is provided with a wire outlet (11) through which the flat cable (7) passes to run through the charging socket body (1);
the wire outlet (11) is arranged towards a side direction of the charging socket body (1); or
the orientation direction of the wire outlet (11) and the side direction of the charging socket body (1) form an angle.

9. The charging socket according to claim 1, wherein a seal gasket (4) is arranged between the flat cable (7) and the charging socket body (1); or
a disassembly portion (8) is provided at the rear end of the charging terminal (2), and the cross sectional shape of the disassembly portion (8) is flat or polygonal; or
the charging socket body (1) further comprises a fixed portion which fixedly connects the flat cable (7) to the charging socket body (1);
the charging socket body (1) is provided with a second threaded hole, the fixed portion is provided with a connecting hole, the fixed portion further comprises a screw, the screw passes through the connecting hole to be threaded with the second threaded hole, and the fixed portion is fixedly connected to the charging socket body (1); or
the number of the charging terminal (2) ranges from 2 to 36; or
the flat cable (7) is made of one of copper or copper alloys or aluminum or aluminum alloys.

10. The charging socket according to claim 1, wherein the charging socket body (1) is provided with a temperature sensor and a control board, and the temperature sensor is electrically connected to the control board through a data line;

11. The charging socket according to claim 10, wherein the temperature sensor is in contact connection with the conductor of the flat cable (7);
the temperature sensor is formed integrally with the conductor of the flat cable (7); or
the control board is a circuit board within which a logical control logical controlcircuit is provided; or
the temperature sensor is an NTC temperature sensor or a PTC temperature sensor; or
the temperature sensor is arranged on the detachable device (3).

12. The charging socket according to claim 1, wherein the cross-sectional area of the connection structure (9) of the charging terminal (2) is less than or equal to the cross-sectional area of the detachable device (3); or
a first coating is provided on the charging terminal (2);
the material of the first coating contains one or more of gold, silver, nickel, tin, tin-lead alloy, zinc, silver-antimony alloy, palladium, palladium-nickel alloy, graphite-silver, graphene-silver and silver-gold-zirconium alloy; or
a second coating is provided on surface of the detachable device (3);
the material of the second coating contains one or more of gold, silver, nickel, tin, tin-lead alloy, zinc, silver-antimony alloy, palladium, palladium-nickel alloy, graphite-silver, graphene-silver and silver-gold-zirconium alloy; or
a first coating is provided on the charging terminal (2), a second coating is provided on surface of the detachable device (3), and the material of the second coating is different from that of the first coating; or
the flat cable (7) is at least partially provided with a third coating, the material of the third coating contains one or more of gold, silver, nickel, tin, tin-lead alloy, zinc, silver-antimony alloy, palladium, palladium-nickel alloy, graphite-silver, graphene-silver and silver-gold-zirconium alloy.

13. A vehicle, wherein comprising the charging socket according to any one of claims 1 to 12.

## Patentansprüche

1. Ladedose, aufweisend: einen Ladedosenkörper (1), einen Ladekontakt (2), eine abnehmbare Vorrichtung (3) und ein Kabel (7), wobei die abnehmbare Vorrichtung (3) elektrisch mit einem Leiter des Kabels (7) verbunden und fest an dem Ladedosenkörper (1) angebracht ist; der Ladekontakt (2) mit einer Verbindungsstruktur (9) versehen ist und mittels der Verbindungsstruktur (9) abnehmbar mit der abnehmbaren Vorrichtung (3) verbunden ist, wobei sowohl der Ladekontakt (2) als auch die abnehmbare Vorrichtung (3) entlang einer ersten Richtung angeordnet sind,
**dadurch gekennzeichnet, dass**
das Kabel ein Flachkabel (7) ist; und ein Abschnitt des Flachkabels (7), der in dem Ladedosenkörper (1) angeordnet ist, sich entlang einer zweiten Richtung senkrecht zur ersten Richtung erstreckt und mit einem Durchgangsloch versehen ist, die abnehmbare Vorrichtung (3) ein festes Ende (31) aufweist, und das feste Ende (31) einen Bolzen und eine Mutter (6) aufweist, wobei sich die Mutter (6) und die Verbindungsstruktur (9) auf gegenüberliegenden Seiten des Durchgangslochs in der ersten Richtung befinden und der Bolzen entlang der ersten Richtung durch das Durchgangsloch verläuft und mit der Mutter (6) verschraubt ist.

2. Ladedose nach Anspruch 1, bei der ein vorderes Ende des Ladedosenkörpers (1) mit einem Hohlraum versehen ist, die abnehmbare Vorrichtung (3) innerhalb des Hohlraums angeordnet ist, der Ladekontakt (2) in eine Öffnung des Hohlraums eingeführt ist und mittels der Verbindungsstruktur (9) abnehmbar mit der abnehmbaren Vorrichtung (3) verbunden ist.

3. Ladedose nach Anspruch 1, bei der die abnehmbare Vorrichtung (3) des Weiteren ferner eine abnehmbare Struktur aufweist, um abnehmbar mit der Verbindungsstruktur (9) verbunden zu werden.

4. Ladedose nach Anspruch 3, bei der die abnehmbare Struktur mit der Verbindungsstruktur (9) verschraubt ist.

5. Ladedose nach Anspruch 3, bei der die abnehmbare Struktur ein Verschluss ist und die Verbindungsstruktur (9) ein Schlitz (5) ist, oder die abnehmbare Struktur ein Schlitz (5) ist und die Verbindungsstruktur (9) ein Verschluss ist, und die abnehmbare Struktur mit der Verbindungsstruktur (9) festgeklemmt ist.

6. Ladedose nach Anspruch 1, bei der die Anzahl der abnehmbaren Vorrichtungen (3) zwischen 2 und 36 liegt.

7. Ladedose nach Anspruch 1, bei der die abnehmbare Vorrichtung (3) ein festes Ende (31) aufweist, das mit dem Leiter des Flachkabels (7) durch Schweißen oder Crimpen oder eine Gewindeverbindung oder durch integrales Formen verbunden ist.

8. Ladedose nach Anspruch 7, bei der
der Leiter des Flachkabels (7) mit einem ersten Gewindeloch versehen ist, das feste Ende (31) einen Bolzen aufweist und der Bolzen mit dem ersten Gewindeloch verschraubt ist;
der Bolzen mit einem Drehmoment von 0,1 N·m bis 30 N·m in das erste Gewindeloch eingeschraubt ist; oder
der Ladedosenkörper (1) mit einem Schlitz (5) versehen ist und das Flachkabel (7) durch den Schlitz (5) geführt ist und der Schlitz (5) so konfiguriert ist, dass er verhindert, dass sich das Flachkabel (7) entlang der Achsenrichtung des Bolzens bewegt;
der Ladedosenkörper (1) mit einem Kabelausgang (11) versehen ist, durch den das Flachkabel (7) verläuft, um durch den Ladedosenkörper (1) zu verlaufen;
der Kabelausgang (11) in Richtung einer Seitenrichtung des Ladedosenkörpers (1) angeordnet ist; oder
die Ausrichtung des Kabelausgangs (11) und die seitliche Richtung des Ladedosenkörpers (1) einen Winkel bilden.

9. Ladedose nach Anspruch 1, bei der eine Dichtungsmanschette (4) zwischen dem Flachkabel (7) und dem Ladedosenkörper (1) angeordnet ist; oder
ein Demontageabschnitt (8) am hinteren Ende des Ladekontakts (2) vorgesehen ist und die Querschnittsform des Demontageabschnitts (8) flach oder polygonal ist; oder
der Ladedosenkörper (1) des Weiteren einen festen Abschnitt aufweist, der das Flachkabel (7) fest mit dem Ladedosenkörper (1) verbindet;
der Ladedosenkörper (1) mit einer zweiten Gewindebohrung versehen ist, der feste Abschnitt mit einer Verbindungsbohrung versehen ist, der feste Abschnitt des Weiteren eine Schraube aufweist, die Schraube durch die Verbindungsbohrung hindurchgeht, um mit der zweiten Gewindebohrung verschraubt zu werden, und der feste Abschnitt fest mit dem Ladedosenkörper (1) verbunden ist; oder
die Anzahl der Ladekontakte (2) zwischen 2 und 36 liegt; oder
das Flachkabel (7) aus Kupfer oder Kupferlegierungen oder Aluminium oder Aluminiumlegierungen besteht.

10. Ladedose nach Anspruch 1, bei der der Ladedosenkörper (1) mit einem Temperatursensor und einer Steuerplatine versehen ist und der Temperatursensor über eine Datenleitung elektrisch mit der Steuerplatine verbunden ist.

11. Ladedose nach Anspruch 10, bei der der Temperatursensor in Kontaktverbindung mit dem Leiter des Flachkabels (7) steht;
der Temperatursensor einstückig mit dem Leiter des Flachkabels (7) ausgebildet ist; oder
die Steuerplatine eine Leiterplatte ist, in der eine logische Steuerschaltung vorgesehen ist; oder
der Temperatursensor ein NTC-Temperatursensor oder ein PTC-Temperatursensor ist; oder
der Temperatursensor auf der abnehmbaren Vorrichtung (3) angeordnet ist.

12. Ladedose nach Anspruch 1, bei der die Querschnittsfläche der Verbindungsstruktur (9) des Ladekontaks (2) kleiner oder gleich der Querschnittsfläche der abnehmbaren Vorrichtung (3) ist; oder
eine erste Beschichtung auf dem Ladekontakt (2) vorgesehen ist;
das Material der ersten Beschichtung eines oder mehrere der folgenden Elemente enthält: Gold, Silber, Nickel, Zinn, Zinn-Blei-Legierung, Zink, Silber-Antimon-Legierung, Palladium, Palladium-Nickel-Legierung, Graphit-Silber, Graphen-Silber und Silber-Gold-Zirkonium-Legierung; oder
eine zweite Beschichtung auf der Oberfläche der abnehmbaren Vorrichtung (3) vorgesehen ist;
das Material der zweiten Beschichtung eines oder mehrere der folgenden Elemente enthält: Gold, Silber, Nickel, Zinn, Zinn-Blei-Legierung, Zink, Silber-Antimon-Legierung, Palladium, Palladium-Nickel-Legierung, Graphit-Silber, Graphen-Silber und Silber-Gold-Zirkonium-Legierung; oder
eine erste Beschichtung auf dem Ladekontakt (2) vorgesehen ist, eine zweite Beschichtung auf der Oberfläche der abnehmbaren Vorrichtung (3) vorgesehen ist und das Material der zweiten Beschichtung sich von dem der ersten Beschichtung unterscheidet; oder
das Flachkabel (7) zumindest teilweise mit einer dritten Beschichtung versehen ist, wobei das Material der dritten Beschichtung eines oder mehrere der folgenden Elemente enthält: Gold, Silber, Nickel, Zinn, Zinn-Blei-Legierung, Zink, Silber-Antimon-Legierung, Palladium, Palladium-Nickel-Legierung, Graphit-Silber, Graphen-Silber und Silber-Gold-Zirkonium-Legierung.

13. Fahrzeug, das die Ladedose nach einem der Ansprüche 1 bis 12 aufweist.

## Revendications

1. Prise de charge comprenant: un corps de prise de charge (1), un contact de charge (2), un dispositif amovible (3) et un câble (7), le dispositif amovible (3) étant relié électriquement à un conducteur du câble (7) et fixé solidement au corps de prise de charge (1); le contact de charge (2) est muni d'une structure de connexion (9) et est relié de manière amovible au dispositif amovible (3) au moyen de la structure de connexion (9), le contact de charge (2) et le dispositif amovible (3) étant tous deux disposés le long d'une première direction,
**caractérisé en ce que**
le câble est un câble plat (7); et une partie du câble plat (7) disposée dans le corps de la prise de charge (1) s'étend le long d'une deuxième direction perpendiculaire à la première direction et est pourvue d'un trou traversant, le dispositif amovible (3) comporte une extrémité fixe (31), et l'extrémité fixe (31) comporte un boulon et un écrou (6), l'écrou (6) et la structure de connexion (9) étant situés sur des côtés opposés du trou traversant dans la première direction, et le boulon s'étendant le long de la première direction à travers le trou traversant et étant vissé à l'écrou (6).

2. Prise de charge selon la revendication 1, dans laquelle une extrémité avant du corps de prise de charge (1) est pourvue d'une cavité, le dispositif amovible (3) est disposé à l'intérieur de la cavité, le contact de charge (2) est inséré dans une ouverture de la cavité et est relié de manière amovible au dispositif amovible (3) au moyen de la structure de connexion (9).

3. Prise de charge selon la revendication 1, dans laquelle le dispositif amovible (3) comprend en outre une structure amovible pour être relié de manière amovible à la structure de connexion (9).

4. Prise de charge selon la revendication 3, dans laquelle la structure amovible est vissée à la structure de connexion (9).

5. Prise de charge selon la revendication 3, dans laquelle la structure amovible est un dispositif de fermeture et la structure de connexion (9) est une fente (5), ou la structure amovible est une fente (5) et la structure de connexion (9) est un dispositif de fermeture, et la structure amovible est serrée avec la structure de connexion (9).

6. Prise de charge selon la revendication 1, dans laquelle le nombre de dispositifs amovibles (3) est compris entre 2 et 36.

7. Prise de charge selon la revendication 1, dans laquelle le dispositif amovible (3) comporte une extrémité fixe (31) qui est reliée au conducteur du câble plat (7) par soudage ou sertissage ou par un raccord fileté ou par moulage intégral.

8. Prise de charge selon la revendication 7, dans laquelle
le conducteur du câble plat (7) est pourvu d'un premier trou fileté, l'extrémité fixe (31) comporte un boulon et le boulon est vissé dans le premier trou fileté;
le boulon est vissé dans le premier trou fileté avec un couple de 0,1 N·m à 30 N·m; ou
le corps de la prise de charge (1) est muni d'une fente (5) et le câble plat (7) est guidé à travers la fente (5) et la fente (5) est configurée de manière à empêcher le câble plat (7) de se déplacer le long de la direction axiale du boulon;
le corps de la prise de charge (1) est muni d'une sortie de câble (11) à travers laquelle passe le câble plat (7) afin de traverser le corps de la prise de charge (1);
la sortie de câble (11) est disposée dans une direction latérale du corps de la prise de charge (1); ou
l'orientation de la sortie de câble (11) et la direction latérale du corps de la prise de charge (1) forment un angle.

9. Prise de charge selon la revendication 1, dans laquelle un manchon d'étanchéité (4) est disposé entre le câble plat (7) et le corps de la prise de charge (1); ou
une partie démontable (8) est prévue à l'extrémité arrière du contact de charge (2) et la forme en coupe transversale de la partie démontable (8) est plate ou polygonale; ou
le corps de la prise de charge (1) comporte en outre une partie fixe qui relie solidement le câble plat (7) au corps de la prise de charge (1);
le corps de la prise de charge (1) est muni d'un deuxième trou fileté, la partie fixe est munie d'un trou de connexion, la partie fixe comprend en outre une vis, la vis traverse le trou de connexion pour être vissée dans le deuxième trou fileté, et la partie fixe est reliée de manière fixe au corps de la prise de charge (1); ou
le nombre de contacts de charge (2) est compris entre 2 et 36; ou
le câble plat (7) est en cuivre ou en alliages de cuivre ou en aluminium ou en alliages d'aluminium.

10. Prise de charge selon la revendication 1, dans laquelle le corps de la prise de charge (1) est équipé d'un capteur de température et d'une carte de commande, et le capteur de température est relié électriquement à la carte de commande par une ligne de données.

11. Prise de charge selon la revendication 10, dans laquelle le capteur de température est en contact avec le conducteur du câble plat (7);
le capteur de température est formé d'un seul tenant avec le conducteur du câble plat (7); ou
la carte de commande est une carte de circuit imprimé dans laquelle est prévu un circuit de commande logique; ou
le capteur de température est un capteur de température NTC ou un capteur de température PTC; ou
le capteur de température est disposé sur le dispositif amovible (3).

12. Prise de charge selon la revendication 1, dans laquelle la section transversale de la structure de connexion (9) du contact de charge (2) est inférieure ou égale à la section transversale du dispositif amovible (3); ou
un premier revêtement est prévu sur le contact de charge (2);
le matériau du premier revêtement contient un ou plusieurs des éléments suivants: or, argent, nickel, étain, alliage étain-plomb, zinc, alliage argent-antimoine, palladium, alliage palladium-nickel, graphite-argent, graphène-argent et alliage argent-or-zirconium; ou
un deuxième revêtement est prévu sur la surface du dispositif amovible (3);
le matériau du deuxième revêtement contient un ou plusieurs des éléments suivants: or, argent, nickel, étain, alliage étain-plomb, zinc, alliage argent-antimoine, palladium, alliage palladium-nickel, graphite-argent, graphène-argent et alliage argent-or-zirconium ; ou
un premier revêtement est prévu sur le contact de charge (2), un deuxième revêtement est prévu sur la surface du dispositif amovible (3) et le matériau du deuxième revêtement diffère de celui du premier revêtement; ou
le câble plat (7) est au moins partiellement recouvert d'un troisième revêtement, le matériau du troisième revêtement contenant un ou plusieurs des éléments suivants: or, argent, nickel, étain, alliage étain-plomb, zinc, alliage argent-antimoine, palladium, alliage palladium-nickel, graphite-argent, graphène-argent et alliage argent-or-zirconium.

13. Véhicule comportant la prise de charge selon l'une des revendications 1 à 12.
